# EUROPÄISCHE PATENTSCHRIFT

(11) **EP 1 231 087 B1**
(45) Veröffentlichungstag und Bekanntmachung des Hinweises auf die Patenterteilung: **11.10.2006**
(21) Anmeldenummer: 02000999.9
(22) Anmeldetag: 17.01.2002
(51) Int. Cl.: B60G 21/05, A01F 15/07

(54) **Aufhängung und Rundballenpresse**
Suspension and rotobaler
Suspension et presse à balles cylindriques

(30) Priorität: 08.02.2001 DE 10105849
(43) Veröffentlichungstag der Anmeldung: 14.08.2002
(73) Patentinhaber: DEERE & COMPANY, Moline, Illinois 61265-8098 (US)
(72) Erfinder: Viaud, Jean, 70100 Gray (FR); Chabassier, Aurélien, Ottumwa, IA 52501 (US)
(74) Vertreter: Magin, Ludwig Bernhard

(56) Entgegenhaltungen:
- EP-A- 0 334 081
- EP-A- 0 952 014
- DE-A- 2 633 015
- DE-A- 19 725 699
- DE-A- 19 731 770
- DE-C- 763 050
- US-A- 2 182 248
- PATENT ABSTRACTS OF JAPAN vol. 2000, no. 17, 5. Juni 2001 (2001-06-05) & JP 07 101215 A (MANNESMANN AG), 18. April 1995 (1995-04-18)

## Beschreibung

Die Erfindung betrifft eine Aufhängung einer Achse eines gezogenen landwirtschaftlich nutzbaren Fahrzeugs mittels Armen, die einerseits in Lagern gegenüber einem Rahmen des Fahrzeugs vertikal schwenkbar aufgenommen sind und andererseits an der Achse angreifen, und eine damit ausgestattete Rundballenpresse.

Aus der DE-A-197 25 699 ist eine Rundballenpresse bekannt geworden, deren Räder an den Enden einer Achse drehbar aufgenommen sind, wobei die Achse an jeder Seite über eine als Lenker ausgebildete Blattfeder an dem Rahmen der Rundballenpresse vertikal schwenkbar angeschlossen ist. Die Anlenkung der Blattfeder an dem Rahmen erfolgt über eine Öse an der Blattfeder und einen Bolzen. Die Federn dienen zugleich zur seitlichen Führung der Achse und der Räder.

Das der Erfindung zugrunde liegende Problem wird darin gesehen, daß aufgrund der unterschiedlichen Bodenbeschaffenheit die Räder jeder Seite unterschiedlich beschleunigt und die Federn unterschiedlich stark zusammengepreßt werden, so daß die Achse nicht stets parallel zu der durch die Lager verlaufenden Schwenkachse verläuft und somit die Lager belastet.

Dieses Problem wird erfindungsgemäß durch die Lehre des Patentanspruchs 1 oder 11 gelöst, wobei in den weiteren Patentansprüchen Merkmale aufgeführt sind, die die Lösung in vorteilhafter Weise weiterentwickeln.

Auf diese Weise führt eine Tordierung des aus der Achse und den seitlichen Armen gebildeten U-förmigen Zusammenbaus nicht zu einer Belastung in den Lagerflächen, und somit wird Verschleiß vermieden. Die sphärischen Lager können z. B. aus einer großen Kugel bestehen, die an dem Rahmen gelagert ist und die von zwei Halbschalen an jedem Arm umgeben wird. Alternativ könnte die Kugel jeweils an einem Arm fest angebracht sein und in Halbschalen an dem Rahmen aufgenommen werden. Vorzugsweise ist wenigstens eine der Halbschalen einstellbar, so daß eine Wartung möglich ist. Als Fahrzeug kommen verschiedene Bauweisen in Betracht, insbesondere Pressen, Feldhäcksler, Sämaschinen, Bodenbearbeitungsgeräte, etc.

Eine flanschartige Verbindung zwischen dem Arm und der Achse hat den Vorteil, daß bei einem Schaden an der Achse oder an einem Arm nicht der gesamte Zusammenbau ausgetauscht werden muß. Es ist auch möglich, bei unterschiedlichen Fahrzeugen unterschiedliche Arme bei gleichen Achsen oder unterschiedliche Achsen bei gleichen Armen zu verwenden. Eine derartige Flanschverbindung, die zu einem starren und verwindungsstabilen Verbund zwischen der Achse und den Armen führt, kann auch ohne Verwendung federnder Arme oder sonstigen Federn benutzt werden, z. B. zur Verstellung der Arbeitshöhe des Fahrzeugs.

Eine symmetrische Ausbildung der Arme entlang einer Längsmittenebene macht es möglich, die Arme an jeder Seite zu benutzen, was die Anzahl der Teile und die Fertigungskosten reduziert.

Anstatt einer federnden Ausbildung der Arme selbst kann zwischen jedem Arm oder der Achse und dem Rahmen eine Feder vorgesehen werden, die die Stöße mildert.

Da es beim Fahren auf holpriger Oberfläche zu Beschleunigungen sowohl nach oben als auch nach unten kommt, ist es sinnvoll, in beiden Richtungen Federn wirken zu lassen. Z. B. kann auf jeder Seite des Arms oder der Achse eine Feder, insbesondere ein Gummiblock vorgesehen werden, so daß sich die Achse nur innerhalb einer kurzen Strecke bewegen kann und in jeder Richtung von Federn abgefangen wird.

Zur Beherrschung des rauhen Betriebs landwirtschaftlicher Geräte sind Federn aus Stahl, nämlich Schraubendruck- oder Schraubenzugfedern, Tellerfedern, hydr. Gasdruckspeicher oder entsprechend dimensionierte Gummiblöcke geeignet.

Um zu vermeiden, daß die Federn ständig beaufschlagt werden, um einen ungefederten Betriebszustand zu ermöglichen, oder um den Federweg zu begrenzen ist eine mechanische Verbindung vorgesehen, die z. B. in der Form einer Lasche, Kette oder eines Seils ausgebildet ist. Diese Verbindung kann entweder einen unveränderlichen Abstand zwischen den Armen oder der Achse und dem Rahmen einstellen oder einen veränderlichen, was z. B. durch ein Langloch oder eine Kette möglich ist, die jeweils eine Kompression, aber keine Expansion zulassen.

Zur Erhaltung einer hohen Lebensdauer von als Gummiblock ausgebildeten Federn, werden diese jeweils in einer Kammer oder einem Gehäuse aufgenommen, so daß nur eine Verdichtung in einer Richtung möglich ist, um die Dämpfungswirkung zu erzielen.

Bei großen Federwegen und im Falle der Gefahr von Schwingungen werden ein oder mehrere Stoßdämpfer vorgesehen, die ein Aufschaukeln der Federn vermeiden.

Rundballenpressen stellen ein bevorzugtes Anwendungsgebiet für derartige Aufhängungen dar, da sie mit zunehmender Geschwindigkeit auf dem Feld und der Straße bewegt werden und im Falle eines geladenen Rundballens ein hohes Gewicht aufweisen, das im Falle von Stößen aufgrund der unebenen Fahrbahn ansonsten zu Schäden führen könnte.

Während die Lager auch direkt an dem Rahmen angebracht werden können, erscheint es vom Kräfteverlauf und der Stabilität her gesehen vorteilhafter, sie auf einer in sich starren Achse vorzusehen, die z. B. mittels Flanschen oder einer Schweißverbindung an dem Rahmen angebracht wird.

In der Zeichnung ist ein nachfolgend näher beschriebenes Ausführungsbeispiel der Erfindung dargestellt. Es zeigt:
- Fig. 1: ein Fahrzeug in Seitenansicht und schematischer Darstellung,

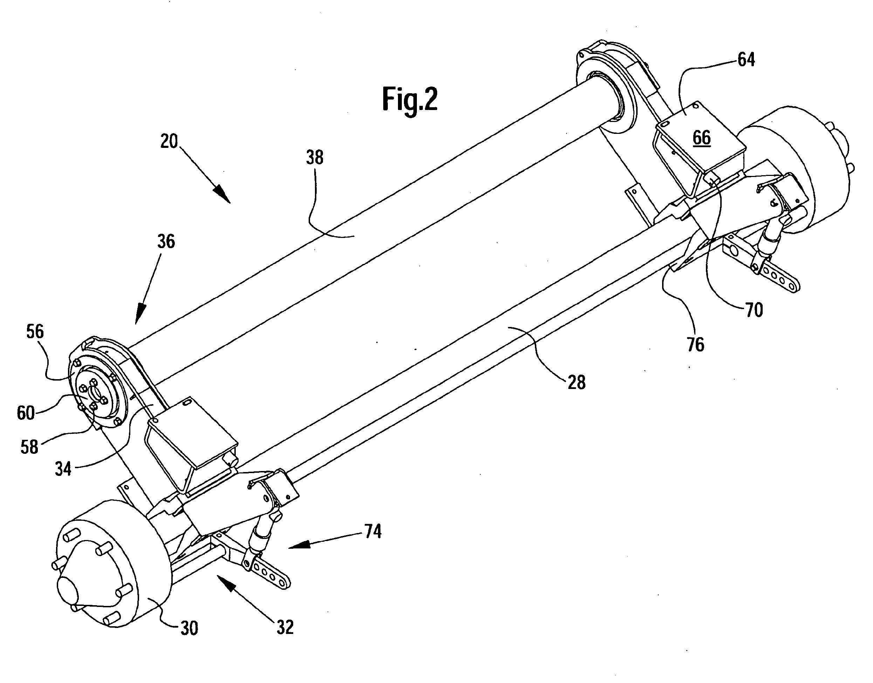

- Fig. 2: eine Achse mit einer erfindungsgemäßen Aufhängung,
- Fig. 3: einen Arm der Aufhängung und
- Fig. 4: das Fahrzeug in einer perspektivischen Ansicht von hinten mit eingebauter Aufhängung.

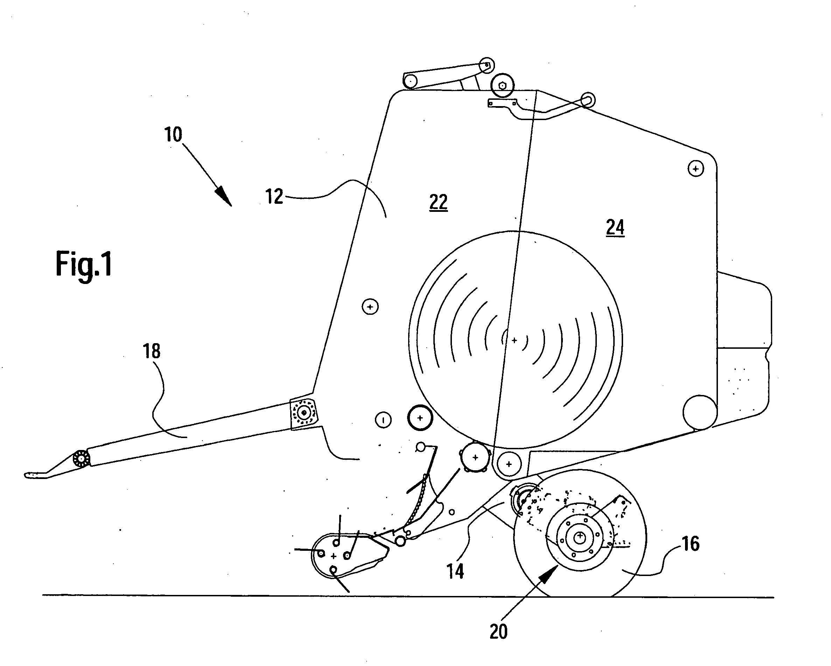

Figur 1 zeigt ein Fahrzeug 10 in der Art einer Rundballenpresse mit einem Preßraumgehäuse 12, einem Rahmen 14, Rädern 16, einer Deichsel 18 und einer erfindungsgemäßen Aufhängung 20.

Das Fahrzeug 10 ist im wesentlichen von bekannter Bauart und kann als Festkammerpresse oder als eine mit einem größenveränderlichen Preßraum ausgebildet werden. Während des Betriebs wird sie über ein Feld gezogen, dessen Oberfläche uneben und rauh ist und Stöße in dem Preßraumgehäuse 12 und dem Rahmen 14 verursacht. Ähnlich verhält es sich bei der Fahrt auf Wegen und Straßen, da dort höhere Geschwindigkeiten erreicht werden. Die Ausbildung als Rundballenpresse steht nur stellvertretend für die Gattung der gezogenen landwirtschaftlichen Fahrzeuge 10 und könnte auch durch einen Feldhäcksler, ein Mähgerät, eine Heuwerbungs- oder Heubergungsmaschine, eine Sä- oder Pflanzmaschine oder dergleichen ersetzt werden.

Das Preßraumgehäuse 12 setzt sich aus einem vorderen rahmenfesten Teil 22 und einem rückwärtigen vertikal schwenkbaren Teil 24 zusammen, die in einem oberen nicht näher bezeichneten Lager schwenkbar miteinander verbunden sind. In dem Preßraumgehäuse 12 sind eine Vielzahl nicht gezeigter Preßelemente, z. B. Preßwalzen, vorgesehen, mit deren Hilfe ein Rundballen hergestellt werden kann.

Der Rahmen 14 trägt die Teile 22, 24 des Preßraumgehäuses 12 und ist vorne mit der Deichsel 18 verbunden, wobei die Verbindung starr über Schweißnähte, Schrauben und/oder Nieten erfolgt. Im unteren Bereich des Rahmens 14 ist auf jeder Seite ein Anschluß 26 für die Aufhängung 20 vorgesehen, der jeweils als nicht sichtbare Ausnehmung ausgebildet ist.

Die Räder 16 sind an den freien Enden einer Achse 28 drehbar aufgenommen und stützen den Rahmen 14 auf dem Boden ab. Die Räder 16 werden auf Radnaben 30 aufgenommen, die wiederum mit Bremsen 32 ausgerüstet sind.

Die Deichsel 18 dient dem Anschluß des Fahrzeugs 10 an ein nicht gezeigtes Zugfahrzeug, z. B. einen Ackerschlepper.

Die Aufhängung 20 der Räder 16 enthält die Achse 28, auf jeder Seite einen Arm 34 und jeweils ein sphärisches Lager 36. In diesem speziellen Ausführungsbeispiel erfolgt der Anschluß der Aufhängung 20 an dem Rahmen 14 über eine weitere Achse 38. Die Aufhängung 20 dient der Verbindung der Räder 16 mit dem Rahmen 14 des Fahrzeugs 10.

Die Achse 28 ist in der Form eines Rohrs mit einem quadratischen oder rechteckigen Querschnitt ausgebildet, das sich seitlich über das Preßraumgehäuse 12 und über die Arme 34 hinaus erstreckt. Diese Achse 28 an sich könnte in gleicher Bauweise auch an einem anderen landwirtschaftlichen Fahrzeug ohne die erfindungsgemäße Aufhängung 20 verwendet werden. An den Enden der Achse 28 sind die Radnaben 30 mit den Bremsen 32 drehbar gelagert.

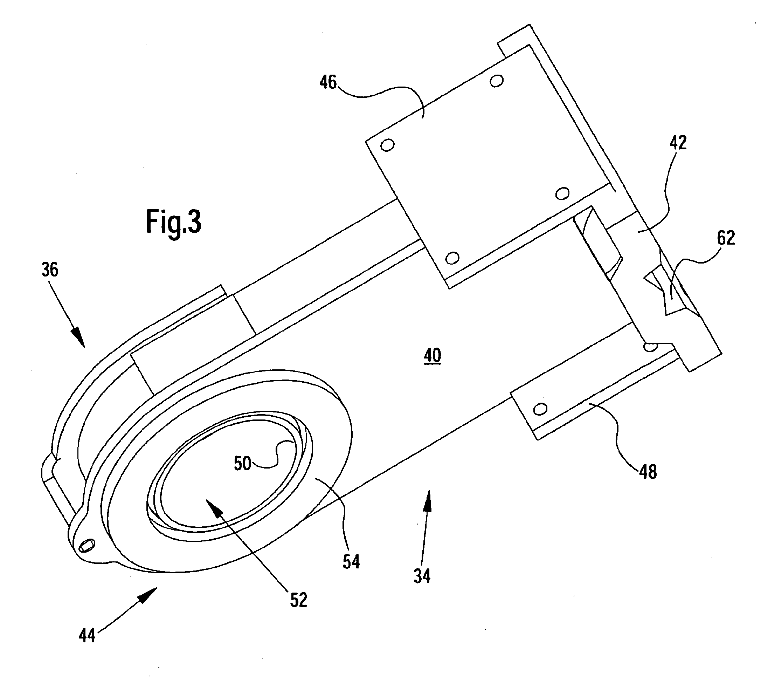

Jeder Arm 34 ist gemäß der Darstellung in Figur 3 ausgebildet und von länglicher Ausführung. Im wesentlichen besteht der Arm 34 aus einem im Einbau hochkant stehenden Rechteckrohr 40, das an seinem rückwärtigen und in Figur 3 rechten Endbereich einen Flansch 42 und an seinem vorderen Endbereich das sphärische Lager 36 trägt und eine nicht ersichtliche Bohrung aufweist, durch die sich die weitere Achse 38 erstrecken kann. Der Arm 34 ist im wesentlichen als ein Schweißzusammenbau ausgebildet, der die Verbindung zwischen dem Rahmen 14 und der Achse 28 herstellt und außerhalb des Rahmens 14 angeordnet ist. Im Anschluß an den Flansch 42 oder gar einteilig mit ihm sind ein Deckflansch 46 und ein Bodenflansch 48 vorgesehen, die parallel zueinander verlaufen und mit nicht näher bezeichneten Bohrungen versehen sind. Vorzugsweise sind der Flansch 42, der Deckflansch 46 und der Bodenflansch 48 mit dem Rechteckrohr 40 verschweißt.

Das sphärische Lager 36 enthält eine große Kugel 50 mit einer sich axial durch sie erstreckenden Bohrung 52 und abgeflachten Endflächen. Diese Kugel 50 ist in einer kongruenten, nicht ersichtlichen, aber an sich bekannten Kugelkammer in dem Arm 34 schwenkbar gelagert und mittels einer festen Scheibe 54 und einer lösbaren Scheibe 56 gegen Entfallen aus der Kugelkammer gesichert. Unter der lösbaren Scheibe 56 können nicht gezeigte Distanzmittel vorgesehen werden, die es ermöglichen, das Spiel der Kugel 50 in der Kugelkammer einzustellen. Die lösbare Scheibe 56 wird mit mehreren Schrauben 58 an der jeweiligen Außenseite des Arms 34 gesichert. Die Kugel 50 ist beweglich in der Kugelkammer aufgenommen und erlaubt Bewegungen der Arme 34 in der Höhe und zur Seite innerhalb der möglichen Grenzen. Das sphärische Lager 36 kann geschmiert werden, wenn dies erforderlich sein sollte, wobei in diesem Fall zwischen der Kugelkammer und den Scheiben 54, 56 Dichtungen vorgesehen wären.

Die weitere Achse 38 ist als ein einfaches Rohr ausgebildet, das breiter ist als der Rahmen 14 und durch nicht näher bezeichnete zylindrische Öffnungen in dem Rahmen 14 geführt ist, um sich über diese hinaus zu erstrecken. Im Berührungsbereich der weiteren Achse 38 mit dem Rahmen 14 sind diese miteinander verschweißt. Die weitere Achse 38 könnte grundsätzlich auch durch Achsstummel ersetzt werden, die an jede Seite angeschlossen sind. Allerdings hat die durchgehende weitere Achse 38 den Vorteil, daß sie den Rahmen 14 selbst versteift. Die weitere Achse 38 ist so dimensioniert, daß sie die Kugel 50 mit wenig Spiel oder fest auf ihren Endbereichen aufnimmt. Die weitere Achse 38 wird mittels eines Deckels 60 auf jeder Seite axial an der Kugel 50 gehalten.

Der Flansch 42 erstreckt sich im wesentlichen vertikal bzw. rechtwinklig zu der Haupterstreckungsrichtung des Rechteckrohrs 40 und weist eine in der Haupterstreckungsrichtung der Achse 28 verlaufende Ausnehmung 62 auf, in die die Achse 28 bereichsweise zum Erreichen eines Formschlusses eintreten kann.

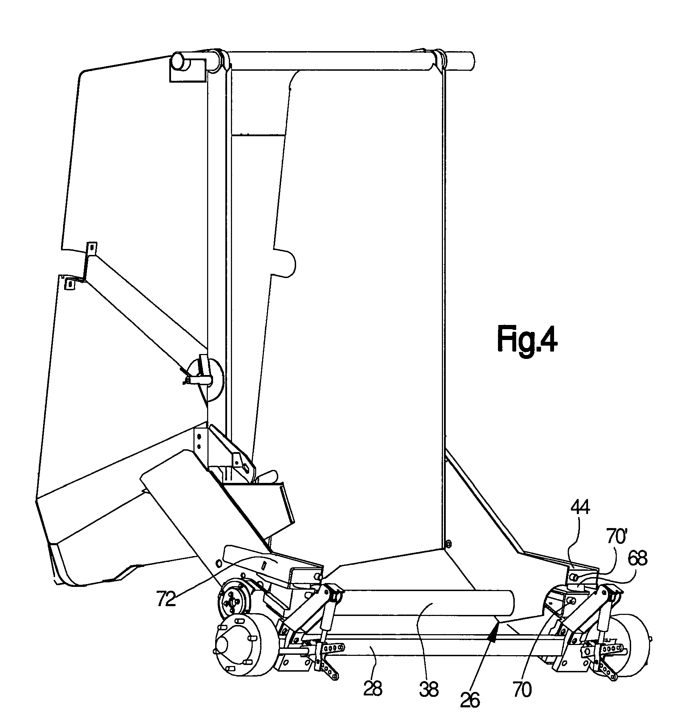

Der Deckflansch 46 und der Bodenflansch 48 sind identisch und zu einer im wesentlichen horizontalen Ebene symmetrisch ausgebildet, was es ermöglicht, den Arm 34 um 180 Grad um seine Längsachse zu drehen, so daß er auf der linken und auf der rechten Seite verwendet werden kann. Der Deckflansch 46 und somit auch der Bodenflansch 48 dienen mit den in ihnen vorgesehenen Bohrungen der lösbaren Aufnahme eines Anschlags 64, der als ein Gehäuse in der Form eines ungleichförmigen Trapezes ausgebildet ist, dessen Oberfläche eine Auflage 66 für eine Feder 68 darbietet, die in Figur 4 zu sehen ist. Der Anschlag 64 ist im vorliegenden Ausführungsbeispiel derart keilförmig ausgestaltet, daß im eingebauten Zustand die Auflage 66 im wesentlichen parallel zu der unteren Abschlußfläche der Feder 68 verläuft. An der Rückseite des Anschlags 64 ist ein Zapfen 70 vorgesehen, durch den sich radial eine nicht näher bezeichnete Bohrung zur Aufnahme eines Splints erstreckt. Der Zapfen 70 kann als ein den Anschlag 64 durchdringender Bolzen ausgebildet werden.

Der Rahmen 14 weist an seinem rückwärtigen Ende auf jeder Seite eine Konsole 44 auf, die oberhalb der sphärischen Lager 26 an die Außenseite des Rahmens 14 angeschlossen, insbesondere angeschweißt ist. Die Konsole 44 weist ein nach unten offenes Gehäuse 72 auf, das sich vertikal mit der Auflage 66 deckt und der Aufnahme der Feder 68 dient. An der Rückseite der Konsole 44 und in vertikaler Flucht zu dem Zapfen 70 befindet sich an dem Anschlag ein Zapfen 70' von gleicher Ausführung. Eine nicht gezeigte Lasche mit zwei Bohrungen, deren Abstand dem Abstand der Zapfen 70, 70' im belasteten Zustand der Aufhängung 20 entspricht kann vorgesehen und auf die Zapfen 70, 70' geschoben werden, so daß eine Relativbewegung zwischen dem Arm 34 und der Konsole 44 nicht, oder falls eine der Bohrungen als Schlitz ausgebildet ist, nur in Maßen möglich ist.

Die Feder 68 ist in dem dargestellten Ausführungsbeispiel als ein Gummiblock ausgebildet, der unverlierbar in dem Gehäuse 72 aufgenommen ist, oben an der Decke des Gehäuses 72 anliegt und unten auf der Auflage 66 aufsitzt. In abweichenden Ausführungsbeispielen könnte anstatt des Gummiblocks auch eine Schraubendruckfeder oder ein Paket von Scheibenfedern vorgesehen werden.

Die Radnaben 30 sind in üblicher Weise ausgebildet, um jeweils ein Rad 16 aufzunehmen. In den Radnaben 30 ist jeweils eine Bremse 32 vorgesehen, von der lediglich eine Betätigungsvorrichtung 74 zu sehen ist, die über nicht näher bezeichnete Gestänge und Stellmotoren verfügt. Die Betätigungsvorrichtung 74 ist an eine Platte 76 montiert, die an den Flansch 42 angeschraubt werden kann und eine nicht näher bezeichnete Ausnehmung zur Aufnahme der Achse 28 aufweist. Die Platte 76 und der Flansch 72 werden mittels nicht gezeigter Schrauben miteinander verspannt.

Nach alledem ergibt sich folgender Aufbau und folgende Funktion in Verbindung mit der erfindungsgemäßen Aufhängung 20.

Die weitere Achse 38 wird durch die Öffnungen des Anschlusses 26 in dem Rahmen 14 gesteckt und mittig fixiert. Anschließend werden im angehobenen Zustand des Rahmens 14 die Arme 34 über die überstehenden Bereiche der weiteren Achse 38 geschoben, die Kugeln 50 aufgeschoben und mittels der Deckel 60 gesichert, die lösbaren Scheiben 56 an die Arme 34 angeschraubt, die Federn 68 in die Gehäuse 72 eingesetzt, die Anschläge 64 auf die Deckflansche 46 montiert, die Achse 28 an den Flanschen 42 mittels der Platten 76 gesichert und die Räder 16 auf die Radnaben 30 aufgesetzt. Wenn nunmehr der Rahmen 14 abgesenkt wird, so daß sich die Räder 16 auf dem Boden abstützen, drückt der Rahmen 14 mit den Federn 68 auf die Auflagen 66. Während der Fahrt können die Federn 68 nachgeben und die Stöße auf den Rahmen 14 dämpfen. Wenn das Fahrzeug 10 in Bodenlöcher fährt und die beiden Seiten unterschiedliche Beschleunigungen erfahren, kann die im wesentlichen aus der Achse 28 und den beiden Armen 34 bestehende Aufhängung 20 tordieren und sich aufgrund der sphärischen Lager 36 ausreichend frei auf der weiteren Achse 38 bewegen, ohne daß es zu Verspannungen kommt.

## Patentansprüche

1. Aufhängung (20) einer Achse (28) eines gezogenen landwirtschaftlich nutzbaren Fahrzeugs (10), mittels Armen (34), die einerseits in Lagern (36) gegenüber einem Rahmen (14) des Fahrzeugs (10) vertikal schwenkbar aufgenommen sind und andererseits an der Achse (28) angreifen, **dadurch gekennzeichnet, daß** die Lager (36) als sphärische Lager (36) ausgebildet sind.

2. Aufhängung nach Anspruch 1, **dadurch gekennzeichnet, daß** die Arme (34) an dem dem Lager (36) gegenüberliegenden Endbereich mit einem Flansch (42) zum lösbaren Anschluß an die Achse (28) versehen sind.

3. Aufhängung nach Anspruch 1 oder 2, **dadurch gekennzeichnet, daß** der Arm (34) um eine Längsmittenebene symmetrisch ausgebildet ist.

4. Aufhängung nach einem oder mehreren der vorherigen Ansprüche, **gekennzeichnet durch** wenigstens eine Feder (68) zwischen dem Arm (34) oder der Achse (28) und dem Rahmen (14).

5. Aufhängung nach einem oder mehreren der vorherigen Ansprüche, **gekennzeichnet durch** eine Federbeaufschlagung der Arme (34) oder der Achse (28) in einer abwärts und einer aufwärts gerichteten Bewegung.

6. Aufhängung nach einem oder mehreren der vorherigen Ansprüche, **dadurch gekennzeichnet, daß** die Feder (68) als Schraubenfeder, Tellerfeder, hydraulischer Gasdruckspeicher oder Gummiblock ausgebildet ist.

7. Aufhängung nach einem oder mehreren der vorherigen Ansprüche, **gekennzeichnet durch** eine mechanische Verbindung zwischen der Achse (28) oder den Armen (34) und dem Rahmen (14) zur Begrenzung der Bewegung der Achse (28).

8. Aufhängung nach einem oder mehreren der vorherigen Ansprüche, **dadurch gekennzeichnet, daß** als Gummiblock ausgebildete Federn (68) in einem Gehäuse (72) aufgenommen sind.

9. Aufhängung nach einem oder mehreren der vorherigen Ansprüche, **gekennzeichnet durch** einen Stoßdämpfer zwischen den Armen (34) oder der Achse (28) und dem Rahmen (14).

10. Rundballenpresse mit einer Aufhängung (20) nach einem oder mehreren der vorherigen Ansprüche.

11. Rundballenpresse nach Anspruch 11, **gekennzeichnet durch** eine weitere Achse (38) zur Verbindung mit dem Rahmen (14), auf der die Lager (36) vorgesehen sind.

## Claims

1. A suspension (20) of an axle (28) of a towed agricultural utility vehicle (10), by means of arms (34) which are received at one end in bearings (36) to pivot vertically relative to a frame (14) of the vehicle (10) and engage at the other end on the axle (28), **characterized in that** the bearings (36) are formed as spherical bearings (36).

2. A suspension according to claim 1, **characterized in that** the arms (34) are provided with a flange (42) for releasable attachment to the axle (28) at the end region opposite the bearing (36).

3. A suspension according to claim 1 or 2, **characterized in that** the arm (34) is of symmetrical form about a longitudinal central plane.

4. A suspension according to one or more of the preceding claims, **characterized by** at least one spring (68) between the arm (34) or the axle (28) and the frame (14).

5. A suspension according to one or more of the preceding claims, **characterized by** a spring action on the arm (34) or the axle (28) in a downwardly and an upwardly directed movement.

6. A suspension according to one or more of the preceding claims, **characterized in that** the spring (68) is formed as a helical spring, a Belleville spring, a hydraulic gas pressure accumulator or a rubber block.

7. A suspension according to one or more of the preceding claims, **characterized by** a mechanical connection between the axle (28) or the arms (34) and the frame (14) for limiting the movement of the axle (28).

8. A suspension according to one or more of the preceding claims, **characterized in that** springs (68) in the form or rubber blocks are received in a housing (72).

9. A suspension according to one or more of the preceding claims, **characterized by** a shock absorber between the arms (34) or the axle (28) and the frame (14).

10. A round baler with a suspension (20) according to one or more of the preceding claims.

11. A round baler according to claim 11, **characterized by** a further axle (38) for the connection to the frame (14), on which the bearings (36) are provided.

## Revendications

1. Suspension (20) d'un axe (28) d'un véhicule (10) utilitaire agricole tracté, au moyen de bras (34) qui, d'une part, sont logés dans des paliers (36) de manière à pouvoir pivoter verticalement par rapport à un châssis (14) du véhicule (10) et, d'autre part, entrent en prise avec l'axe (28), **caractérisée en ce que** les paliers (36) sont réalisés sous forme de paliers sphériques (36).

2. Suspension selon la revendication 1, **caractérisée en ce que** les bras (34), au niveau de la zone d'extrémité opposée au palier (36), sont munis d'une bride (42) pour le montage amovible sur l'axe (28).

3. Suspension selon la revendication 1 ou 2, **caractérisée en ce que** le bras (34) est réalisé symétriquement autour d'un plan médian longitudinal.

4. Suspension selon une ou plusieurs des revendications précédentes, **caractérisée par** au moins un ressort (68) entre le bras (34) ou l'axe (28) et le châssis (14).

5. Suspension selon une ou plusieurs des revendications précédentes, **caractérisée par** une sollicitation par ressort des bras (34) ou de l'axe (28) dans un mouvement dirigé vers le bas et un mouvement dirigé vers le haut.

6. Suspension selon une ou plusieurs des revendications précédentes, **caractérisée en ce que** le ressort (68) est réalisé sous forme de ressort hélicoïdal, de ressort à disque, de réservoir à gaz comprimé hydraulique ou de bloc en caoutchouc.

7. Suspension selon une ou plusieurs des revendications précédentes, **caractérisée par** un assemblage mécanique entre l'axe (28) ou les bras (34) et le châssis (14) pour limiter le mouvement de l'axe (28).

8. Suspension selon une ou plusieurs des revendications précédentes, **caractérisée en ce que** les ressorts (68), conçus sous forme de bloc de caoutchouc, sont logés dans un boîtier (72).

9. Suspension selon une ou plusieurs des revendications précédentes, **caractérisée par** un amortisseur de choc entre les bras (34) ou l'axe (28) et le châssis (14).

10. Presse à balles rondes comportant une suspension (20) selon une ou plusieurs des revendications précédentes.

11. Presse à balles rondes selon la revendication 10, **caractérisée par** un axe (38) supplémentaire pour l'assemblage avec le châssis (14), sur lequel sont prévus les paliers (36).
